# EUROPEAN PATENT APPLICATION

(11) **EP 4 265 686 A1**
(43) Date of publication of application: **25.10.2023**
(21) Application number: 22305587.2
(22) Date of filing: 21.04.2022
(51) Int. Cl.: C08L 77/02, C08L 77/06, C08K 5/00

(54) **AUTOMOTIVE COMPONENT COMPRISING POLYAMIDE COMPOSITION WITH HIGH FUEL RESISTANCE**

(71) Applicant: Solvay Specialty Polymers USA, LLC., Alpharetta, GA 30005-3914 (US)
(72) Inventor: TOURAUD, Franck, 38780 Eyzin Pinet (FR); SERVEL, Clement, 38540 Saint Just Chaleyssin (FR); JEOL, Stéphane, 69230 Saint-Genis-Laval (FR); BOSSENNEC, Véronique, 69360 Serezin-du-Rhône (FR)
(74) Representative: Benvenuti, Federica

(57) **Abstract**

Described herein is a fuel-contacting automotive component comprising a polyamide composition, the polyamide composition comprising at least 50% by weight (wt%) of a polyamide comprising at least 50% by mol (mol%) of recurring units of -NH-(CH₂)₈-C(O)- and/or -NH-(CH₂)₉-C(O)-; from 0 wt% to 50 wt% of at least one reinforcing agent, and from 0 wt% to 30 wt% of at least one additive, with low fuel uptake and high melting temperature. The present invention also relates to a method of transporting a fuel using an automotive component comprising the polyamide composition.

## Description

### TECHNICAL FIELD

The present invention relates to a fuel-contacting automotive component comprising a polyamide composition comprising at least 50% by weight (wt%) of a polyamide comprising at least 50% by mol (mol%) recurring units of -NH-(CH₂)₈-C(O)- and/or -NH-(CH₂)₉-C(O)-; from 0 wt% to 50 wt% of at least one reinforcing agent and from 0 wt% to 30 wt% of at least one additive, with low fuel uptake and high melting temperature. The present invention also relates to a method of transporting a fuel using an automotive component comprising the polyamide composition.

### BACKGROUND

A polyamide is one of polymers which have been frequently used as engineering plastics for a very wide range of applications. A polyamide composition is of significant commercial interest and may be used to produce automobile or electrical components, generally by injection molding, in view of weight reduction, ease in assembling parts/components and also its design flexibility.

US 2019/390056 (BASF SE) discloses a polyamide composition comprising at least one synthetic polyamide, a particularly defined chromium complex dye, carbon black, and glass fibers, which is advantageously suitable for use in high-temperature sector, e.g. components for automobile, soldering under lead-free conditions and components for electrical or electronic applications.

For particular applications, such as automobile components which should be resistant to fuel, including a fuel line, a fuel injector, a fuel nozzle, a fuel container/tank, a combustion turbine engine, a turbine blade, a turbine nozzle and a bearing, which are to be exposed to fuel under high temperature during their lifecycle, required is a polyamide composition which is capable of exhibiting excellent fuel resistance and high thermal stability.

US 2002/0019477 A1 (Evonik Degussa GmbH) discloses a molding composition comprising polyamides, impact modifier containing anhydride groups and a copolymer comprising a) α-olefin, b) acrylic compound and c) olefinically unsaturated epoxide, carboxylic anhydride, carboximide, oxazoline or oxazinone, wherein the polyamide has an excess of amino end groups and exhibits improved low-temperature impact strength to be used for producing engineering components in the automotive industry sector, such as tubes, filler necks or containers, in particular for conducting or storing liquids or gases, such as fuel-pump lines.

In this regard, polyamide 12 (PA12) has been most highlighted as an optimal polyamide for the automotive components, thanks to its excellent mechanical properties comparable to those of polyamide 6 (PA6) or polyamide 66 (PA66) in addition to its low water uptake and density. Further, the low density of PA12, i.e. about 1.01 g/mL, which results from its relatively long hydrocarbon chain, confers it good dimensional stability. In particular, PA12 is known to be resistant to fuel. Nonetheless, there exists drawback of PA12, e.g. limited thermal stability due to its relatively low melting temperature.

Accordingly, in the automotive applications, notably for fuel-contacting components, there is a need for an alternative material to replace PA12, preferably a polyamide exhibiting better thermal stability than PA12.

In parallel, raw materials which may be prepared from renewable feedstock, i.e. bio-based or recycled materials, are more and more interested and favored in view of sustainability and hence diverse studies have been made to develop industrially practical processes using fatty acids and esters as starting materials in the manufacture of the monomers of polyamides. Unfortunately, PA12 has not been prepared yet from renewable resources, while US 2011/0105774 A1 (Arkema France), for instance, discloses a process of synthesizing 9-aminononanoic acid or its esters from natural unsaturated fatty acids comprising at least one step of metathesis of the natural fatty acid and a step of oxidation by oxidative cleavage, corresponding to polyamide 9 (PA9).

It is thus required in this field to obtain a fuel-contacting automotive component that is made from a polyamide composition having low fuel uptake and high melting temperature, preferably by using a bio-based polyamide.

### SUMMARY

A first aspect of the present invention is directed to a fuel-contacting automotive component comprising a polyamide composition comprising
- at least 50% by weight (wt%) of a polyamide comprising at least 50% by mol (mol%) of recurring units R_{(PA1)} according to formula (V): 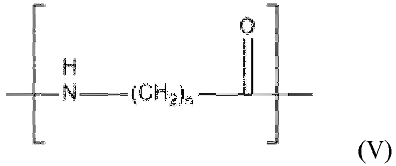
- from 0 wt% to 50 wt% of at least one reinforcing agent; and
- from 0 wt% to 30 wt% of at least one additive;
   wherein
- n is 8 or 9;
- wt% is relative to the total weight of the polyamide composition; and
- mol% is relative to the total moles of recurring units in the polyamide.

In some embodiments, the fuel-contacting automotive component is a fuel line, a fuel injector, a fuel nozzle, a fuel container/tank, a combustion turbine engine, a turbine blade, a turbine nozzle or a bearing.

A second aspect of the present invention pertains to method of transporting a fuel using an automotive component comprising a polyamide composition, the polyamide composition comprising at least 50 wt% of a polyamide comprising at least 50 mol% of recurring units R_{(PA1)} according to formula (V); from 0 wt% to 50 wt% of at least one reinforcing agent and from 0 wt% to 30 wt% of at least one additive, relative to the total weight of the polyamide composition.

It was surprisingly found by the inventors that PA9, resulting from polycondensation of the C9 aminoacid, preferably obtained from bio-sourced oleic acid, offers a particularly interesting combination of properties of low fuel uptake and high melting temperature, as well as polyamide 10 (PA10). In addition, it is true that the good thermal stability of PA9 and PA10 is an advantage in producing thin film and coatings which may be applied in manufacturing a fuel-contacting automotive component.

The various aspects, advantages, and features of the invention will be more readily understood and appreciated by reference to the detailed description and examples.

### BRIEF DESCRIPTION OF THE DRAWINGS

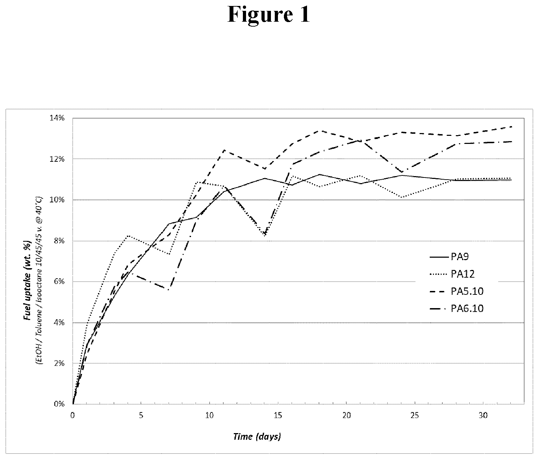

**FIG. 1** represents fuel uptake (in wt%) at 40°C of PA9, PA510, PA610 and PA12.

### DETAILED DESCRIPTION OF THE INVENTION

### DEFINITIONS

Throughout this specification, unless the context requires otherwise, the word 'comprise' or 'include', or variations such as 'comprises', 'comprising', 'includes', 'including' will be understood to imply the inclusion of a stated element or method step or group of elements or method steps, but not the exclusion of any other element or method step or group of elements or method steps. The term 'comprising' includes 'consisting essentially of and also 'consisting of. According to preferred embodiments, the word 'comprise' and 'include' and their variations mean 'consist exclusively of.

As used in this specification, the singular forms 'a', 'an' and 'the' include plural aspects unless the context clearly dictates otherwise. The term 'and/or' includes the meanings 'and', 'or' and also all the other possible combinations of the elements connected to this term.

The term 'between' should be understood as being inclusive of the limits.

As used herein, 'alkyl' groups include saturated hydrocarbons having one or more carbon atoms, including straight-chain alkyl groups, such as methyl, ethyl, propyl, butyl, pentyl, hexyl, heptyl, octyl, nonyl, decyl, cyclic alkyl groups (or 'cycloalkyl' or 'alicyclic' or 'carbocyclic' groups), such as cyclopropyl, cyclopentyl, cyclohexyl, cycloheptyl, and cyclooctyl, branched-chain alkyl groups, such as isopropyl, tert-butyl, sec-butyl, and isobutyl, and alkyl-substituted alkyl groups, such as alkyl-substituted cycloalkyl groups and cycloalkyl-substituted alkyl groups.

As used herein, the term 'alkylene' groups include bivalent saturated hydrocarbons having one or more carbon atoms and the term 'cycloalkylene' groups include bivalent saturated cyclic hydrocarbons having at least three carbon atoms.

As used herein, the term 'aryl' refers to a phenyl, indanyl or naphthyl group. The aryl group may comprise one or more alkyl groups, and are called sometimes in this case "alkylaryl"; for example may be composed of an aromatic group and two C₁-C₆ groups (e.g. methyl or ethyl). The aryl group may also comprise one or more heteroatoms, e.g. N, O or S, and are called sometimes in this case 'heteroaryl' group; these heteroaromatic rings may be fused to other aromatic systems. Such heteroaromatic rings include, but are not limited to furanyl, thienyl, pyrrolyl, pyrazolyl, imidazolyl, triazolyl, isoxazolyl, oxazolyl, thiazolyl, isothiazolyl, pyridyl, pyridazyl, pyrimidyl, pyrazinyl and triazinyl ring structures. The aryl or heteroaryl substituents may be unsubstituted or substituted with one or more substituents selected from but not limited to halogen, hydroxy, C₁-C₆ alkoxy, sulfo, C₁-C₆ alkylthio, C₁-C₆ acyl, formyl, cyano, C₆-C₁₅ aryloxy or C₆-C₁₅ aryl, provided that the substituents are sterically compatible and the rules of chemical bonding and strain energy are satisfied.

As used herein, the term 'arylene' refers to an aromatic hydrocarbon which is bivalent, such as phenylene.

The term 'halogen' or 'halo' includes fluorine, chlorine, bromine and iodine, with fluorine being preferred.

The term 'aliphatic group' includes organic moieties characterized by straight or branched-chains, typically having between 1 and 50 carbon atoms. In complex structures, the chains may be branched, bridged, or cross-linked. Aliphatic groups include alkyl groups, alkenyl groups, and alkynyl groups.

As used herein, the terminology '(Cₙ-Cₘ)' in reference to an organic group, wherein n and m are integers, respectively, indicates that the group may contain from n carbon atoms to m carbon atoms per group.

Ratios, concentrations, amounts, and other numerical data may be presented herein in a range format. It is to be understood that such range format is used merely for convenience and brevity and should be interpreted flexibly to include not only the numerical values explicitly recited as the limits of the range, but also to include all the individual numerical values or sub-ranges encompassed within that range as if each numerical value and sub-range is explicitly recited. n the context of the present invention, the term 'percent by weight' (wt%) indicates the content of a specific component in a mixture, calculated as the ratio between the weight of the component and the total weight of the mixture. As used herein, the concentration of recurring units in 'percent by mol' (mol%) refers to the concentration relative to the total number of recurring units in the polyamide, unless explicitly stated otherwise.

As used herein, a 'semi-crystalline' polyamide comprises a heat of fusion of at least 5 Joules per gram (J/g) measured by differential scanning calorimetry (DSC) at a heating rate of 20° C/min. Similarly, as used herein, an "amorphous" polyamide comprises a heat of fusion of less than 5 J/g, preferably of less than 3 J/g, and more preferably of less than 2 J/g measured using DSC at a heating rate of 20 °C/min. A heat of fusion can be measured according to ASTM D3418.

As used herein, when referring to 'glass transition temperature' (T_{g}) and 'melting temperature' (Tₘ) for the polyamide (composition), T_{g} and Tₘ are preferably measured according to ASTM D3418, unless stated otherwise.

As used herein, the 'molecular weight' is preferably measured by the gel permeation chromatography (GPC) according to ASTM D5296, unless stated otherwise.

In the passages of the present specification which will follow, any description, even though described in relation to a specific embodiment, is applicable to and interchangeable with other embodiments of the present disclosure. Each embodiment thus defined may be combined with another embodiment, unless otherwise indicated or clearly incompatible. In addition, it should be understood that the elements and/or the characteristics of a composition, a product or article, a process or a use, described in the present specification, may be combined in all possible ways with the other elements and/or characteristics of the composition, product or article, process or use, explicitly or implicitly, this being done without departing from the scope of the present description.

It is to be understood that both the foregoing general description and the following detailed description are exemplary and are intended to provide further explanation of the invention as claimed. Accordingly, various changes and modifications described herein will be apparent to those skilled in the art. Moreover, descriptions of well-known functions and constructions may be omitted for clarity and conciseness.

### Polyamide composition

The present invention provides a fuel-contacting automotive component comprising a polyamide composition, the polyamide composition comprising:
- at least 50% by weight (wt%) of a polyamide comprising at least 50% by mol (mol%) of recurring unit R_{(PA1)} according to formula (V): 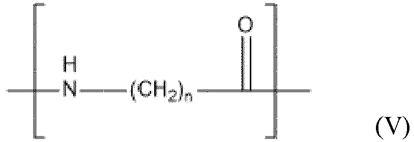
- from 0 wt% to 50 wt% of at least one reinforcing agent; and
- from 0 wt% to 30 wt% of at least one additive;
   wherein
- n is 8 or 9;
- wt% is relative to the total weight of the polyamide composition; and
- mol% is relative to the total moles of recurring units in the polyamide.

In one embodiment, the polyamide has a molecular weight, as measured according to ASTM D5296, of at least 12,000, at least 13,000, at least 14,000, or at least 14,500.

Rational choice of a polyamide for a specific application requires simultaneous considerations in addition to standard properties, of part design and processing feasibility because they are interrelated and all have an effect on the ultimate part performance.

Depending on the molecular weight, the mechanical properties of a polyamide, e.g. tensile properties such as elongation at break substantially would differ. For instance, in case the molecular weight is below 10,000, the elongation at break would be too low to apply the polyamide in manufacturing a fuel-contacting automotive component.

In another embodiment, the polyamide has a glass transition temperature, as measured according to ASTM D3418, of at least 20°C, preferably at least 30°C, more preferably at least 40°C, and/or of at most 200°C, preferably at most 190°C, more preferably at most 180°C.

In a particular embodiment, the polyamide has a glass transition temperature, as measured according to ASTM D3418, of from 35°C to 80°C.

In another particular embodiment, the polyamide has a glass transition temperature, as measured according to ASTM D3418, of from 40°C to 70°C, preferably from 40°C to 60°C, more preferably from 40°C to 50°C.

In a preferred embodiment, the polyamide is bio-based.

In some embodiments, the polyamide comprises at least 80 mol%, preferably 90 mol%, more preferably 99 mol%, and most preferably 100 mol% of recurring units R_{(PA1)} according to formula (I), relative to the total moles of recurring units in the polyamide.

In one embodiment, the polyamide has a heat of fusion, as measured according to ASTM D3418, of at least 5 J/g, preferably at least 7 J/g, more preferably at least 10 J/g, and/or of at most 80 J/g, preferably at most 70 J/g, more preferably at most 60 J/g.

In some embodiments, the polyamide further comprises at least 0.1 mol% of recurring units R_{(PA2)} and/or R_{(PA3)} according to formulae (VI) and (VII), respectively: 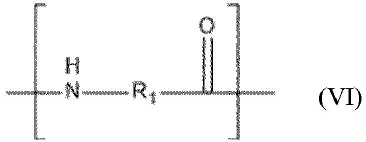 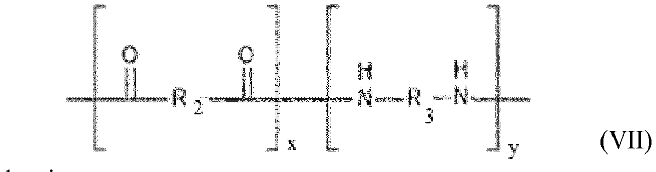 wherein
- R₁ is selected from the group consisting of a C₂-C₁₈ alkylene; a C₆-C₁₈ cycloalkylene; and a C₆-C₁₈ arylene group;
- R₂ is selected from the group consisting of a C₂-C₅₀, C₄-C₂₄, or C₆-C₁₈ alkylene; a C₆-C₃₀, C₆-C₂₄, or C₆-C₁₈ cycloalkylene; and a C₆-C₃₀, C₆-C₂₄, or C₆-C₁₈ aryl group;
- R₃ is selected from the group consisting of a C₄-C₅₀, C₆-C₂₄, or C₈-C₁₈ alkyl group; a C₄-C₃₀, C₆-C₂₄, or C₆-C₁₈ cycloalkyl group; and a C₆-C₃₀, C₆-C₂₄, or C₈-C₁₈ aryl group;
- x and y are 0 or 1, respectively; and
- the recurring unit R(_{PA2}) of formula (VI) is different from the recurring unit R_{(PA1)} of formula (V).

In one embodiment, x is zero and y is 1 such that recurring units R_{(PA3)} are recurring units of formula:

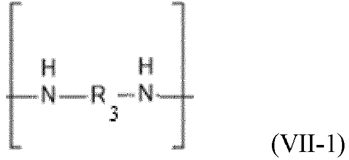

In another embodiment, x is 1 and y is zero such that recurring units R_{(PA3)} are recurring units of formula:

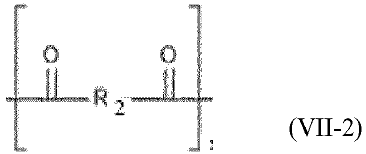

In a particular embodiment, the polyamide further comprises at least 1 mol% of recurring units R_{(PA2)} and/or R_{(PA3)} according to formulae (VI) and (VII), respectively.

In another particular embodiment, the polyamide further comprises at least 3 mol% of recurring units R_{(PA2)} and/or R_{(PA3)} according to formulae (VI) and (VII), respectively.

In the present invention, the polyamide may comprise additional recurring units, distinct from recurring units (R_{PA2}) and (R_{PA3}).

In one embodiment, the polyamide is the condensation product of a reaction mixture comprising
- an amino acid/lactam component comprising at least 50 mol%, preferably at least 75 mol%, more preferably at least 80 mol%, most preferably at least 85 mol%, and/or at most 100 mol%, preferably at most 99 mol%, more preferably at most 98 mol%, most preferably at most 97 mol% of an amino acid of formula (I):

   NH₂-(CH₂)ₙ-COOH (I)

   wherein
   o n is 8 or 9; and
   o mol% is relative to the total moles of amino acids in the amino acid/lactam component; and
- a diamine component comprising from 0 mol% to 50 mol%, preferably at least 5 mol%, more preferably at least 10 mol%, most preferably at least 15 mol%, and/or preferably at most 45 mol%, more preferably at most 40 mol%, most preferably 30 mol% of a diamine of formula (III):

   H₂N-R₂-NH₂ (III)

   wherein
   ∘ R₂ is selected from the group consisting of a C₂-C₅₀, C₄-C₂₄, or C₆-C₁₈ alkylene; a C₆-C₃₀, C₆-C₂₄, or C₆-C₁₈ cycloalkylene; and a C₆-C₃₀, C6-C24, or C₆-C₁₈ arylene group; and
   ∘ mol% is relative to the total moles of diamines in the diamine component; and
- a dicarboxylic acid component comprising from 0 mol% to 50 mol%, preferably at least 5 mol%, more preferably at least 10 mol%, most preferably at least 15 mol%, and/or preferably at most 45 mol%, more preferably at most 40 mol%, most preferably at most 30 mol% of a dicarboxylic acid of formula (III):

   HOOC-R₃-COOH (IV)

   wherein
   ∘ R₃ is selected from the group consisting of a C₄-C₅₀, C₆-C₂₄, or C₈-C₁₈ alkylene group; a C₄-C₃₀, C₆-C₂₄, or C₆-C₁₈ cycloalkylene group; and a C₆-C₃₀, C₆-C₂₄, or C₈-C₁₈ arylene group; and
   o mol% is relative to the total moles of dicarboxylic acids in the dicarboxylic acid component.

In another embodiment, the amino acid/lactam component further comprises from 0 mol% to 50 mol%, preferably at least 5 mol%, more preferably at least 10 mol%, most preferably at least 15 mol%, and/or preferably at most 45 mol%, more preferably at most 40 mol%, most preferably at most 30 mol% of an amino acid of formula (II):

NH₂-R₁-COOH (II)

wherein
- R₁ is selected from the group consisting of a C₂-C₁₈ alkyl; a C₆-C₁₈ cycloalkyl; and a C₆-C₁₈ aryl group; and
- the amino acid of formula (I) is different from the amino acid of formula (II).

In the other embodiment, the amino acid/lactam component further comprises from 0 mol% to 50 mol%, preferably at least 5 mol%, more preferably at least 10 mol%, most preferably at least 15 mol%, and/or preferably at most 45 mol%, more preferably at most 40 mol%, most preferably at most 30 mol% of a lactam.

In the present invention, a lactam suitable for use for the manufacture of polyamide can be any of β-lactam or ε-caprolactam.

Non-limitative examples of amino acids suitable for use in manufacturing polyamides are notably 6-amino-hexanoic acid, 9-aminononanoic acid, 10-aminodecanoic acid, 11-aminoundecanoic acid and 12-aminododecanoic acid.

In the present invention, the dicarboxylic acid component includes notably salts, anhydrides, esters and acid halides, able to form amide groups; and similarly the diamine component includes notably salts thereof, equally able to form amide groups. Said dicarboxylic acid component can be an aromatic dicarboxylic acid comprising two reactive carboxylic acid groups or an aliphatic dicarboxylic acid comprising two reactive carboxylic acid groups.

Non-limitative examples of dicarboxylic acids are notably phthalic acids, including isophthalic acid and terephthalic acid, 2,5-pyridinedicarboxylic acid, 2,4-pyridinedicarboxylic acid, 3,5-pyridinedicarboxylic acid, 2,2-bis(4-carboxyphenyl) propane, bis(4-carboxyphenyl) methane, 2,2-bis(4-carboxyphenyl) hexafluoropropane, 2,2-bis(4-carboxyphenyl) ketone, 4,4'-bis(4-carboxyphenyl) sulfone, 2,2-bis(3-carboxyphenyl) propane, bis(3-carboxyphenyl) methane, 2,2-bis(3-carboxyphenyl) hexafluoropropane, 2,2-bis(3-carboxyphenyl) ketone, bis(3-carboxyphenoxy) benzene, naphthalene dicarboxylic acids, including 2,6-naphtahlene dicarboxylic acid, 2,7-naphtahlene dicarboxylic acid, 1,4-naphtahlene dicarboxylic acid, 2,3-naphtahlene dicarboxylic acid, 1,8-naphtahlene dicarboxylic acid, oxalic acid, malonic acid, succinic acid, glutaric acid, 2,2-dimethyl-glutaric acid, adipic acid, 2,4,4-trimethyl adipic acid, pimelic acid, suberic acid, sebacic acid, undecanedioic acid, and dodecandioic acid.

Non-limitative examples of diamines are notably 1,2-diaminoethane, 1,2-diaminopropane, propylene-1,3-diamine, 1,3-diaminobutane, 1,4-diaminobutane, 1,5-diaminopentane, 1,5-diamino-2-methylpentane, 1,4-diamino-1,1-dimethylbutane, 1,4-diamino-1-ethylbutane, 1,4-diamino-1,2-dmethylbutane, 1,4-diamino-1,3 -dimethylbutane, 1,4-diamino-1,4-dimethylbutane, 1,4-diamino-2.3-dimethylbutane, 1,2-diamino-1-buthylethane, 1,6-diaminohexane, 1,7-diaminoheptane, 1,8-diamino-octane, 1,6-diamino-2,5-dimethylhexane, 1,6-diamino-2,4-dimethylhexane, 1,6-diamino-3,3-dimethylhexane, 1,6-diamino-2,2-dimethylhexane, 1,9-diaminononane, 1,6-diamino-2,2,4-trimethylhexane, 1,6-diamino-2,4,4-trimethylhexane, 1,7-diamino-2,3-dimethylheptane, 1,7-diamino-2,4-dimethylheptane, 1,7-diamino-2,5-dimethylheptane, 1,7-diamino-2,2dimethylheptane, 1,10-diaminodecane, 1,8-diamino-1,3-imethyloctane, 1,8-diamino-1,4-dimethyloctane, 1,8-diamino-2,4-dimethyloctane, 1,8-diamino-3,4-dimethyloctane, 1,8-diamino-4,5-dimethyloctane, 1,8-diamino-2,2-dimethyloctane, 1,8-diamino-3,3 -dimethyloctane, 1,8-diamino-4,4-dimethyloctane, 1,6-diamino-2,4-diethylhexane, 1.9-diamino-5-methylnonane, 1,11-diaminoundecane, 1,12-diaminododecane, 1,13-diaminotridecane, meta-phenylene diamine, meta-xylylene diamine and para-xylylene diamine.

In a particular embodiment, at least one of R₁, R₂ and R₃ is substituted with one or more substituents selected from the group consisting of halogen, hydroxy, sulfo, C₁-C₆ alkoxy, C₁-C₆ alkylthio, C₁-C₆ acyl, formyl, cyano, C₆-C₁₅ aryloxy or C₆-C₁₅ aryl, alkaline earth metal sulfonate, alkyl sulfonate, quaternary ammonium, amine derivative and carboxyl derivative, and/or at least one of R₁, R₂ and R₃ comprises a heteroatom.

In a more particular embodiment, at least one of R₁, R₂ and R₃ comprises a heteroatom selected from the group consisting of N, O and S.

In the present invention, the reaction mixture may further comprises a mono acid and/or a mono amine as end-capping agents.

In some embodiment, the polyamide has more carboxyl end groups than amino end groups.

In other embodiments, the polyamide has carboxyl end groups in an amount identical to amino end groups.

In some embodiments, the polyamide composition includes a plurality of distinct polyamides according to the above description.

### Reinforcing agent

In the present invention, the term 'reinforcing agent' is intended to denote, in particular, a material added to a polymer composition to improve its properties, such as rigidity, tensile strength, impact resistance and dimensional stability and/or to reduce the cost. By appropriately selecting these materials, not only the economics but also other properties such as processing and mechanical behavior can be improved. Although those reinforcing agents retain their inherent characteristics, very significant differences are often observed depending on the molecular weight, compounding technique and the presence of other additives in the formulation. Therefore, once the basic property requirements are established, the optimum type and loading level of reinforcing agent for the balance between cost and performance must be determined.

In the present invention, the polyamide composition comprises from 0 wt% to 50 wt% of at least one reinforcing agent, relative to the total weight of polyamide composition.

In a particular embodiment, the reinforcing agent is comprised in an amount of at least 5 wt%, preferably 10 wt%, more preferably at least 15 wt%, and/or of at most 50 wt%, preferably at most 45 wt%, more preferably at most 40 wt%, based upon the total weight of the polyamide composition.

In one embodiment, the reinforcing agent is selected from the group consisting of mineral fillers (e.g. talc, mica, kaolin, calcium carbonate, calcium silicate, magnesium carbonate), glass fibers, carbon fibers, synthetic polymeric fibers, aramid fibers, aluminum fibers, titanium fibers, magnesium fibers, boron carbide fibers, rock wool fibers, steel fibers, natural fibers (e.g. linen, hemp or cellulose), graphene, nano-graphene, carbon nanotube, wollastonite, glass balls (e.g. hollow glass microspheres) and any combination of two or more thereof.

Carbon fibers and/or glass fibers are most advantageously used in the polyamide composition of the present invention.

Glass fibers are silica-based glass compounds that contain several metal oxides which can be tailored to create different types of glass. The main oxide is silica in the form of silica sand; the other oxides such as calcium, sodium and aluminum are incorporated to reduce the melting temperature and impede crystallization.

The glass fibers may be endless fibers or chopped glass fibers.

In some embodiments, the glass fibers have an average length of from 3 mm to 50 mm. In some such embodiments, the glass fibers have an average length of from 3 mm to 10 mm, from 3 mm to 8 mm, from 3 mm to 6 mm, or from 3 mm to 5 mm. In alternative embodiments, the glass fibers have an average length of from 10 mm to 50 mm, from 10 mm to 45 mm, from 10 mm to 35 mm, from 10 mm to 30 mm, from 10 mm to 25 mm or from 15 mm to 25 mm.

In some embodiments, the glass fibers have generally an equivalent diameter of from 5 to 20 µm, preferably of from 5 to 15 µm, more preferably of 5 to 10 µm.

All glass fiber types, such as A, C, D, E, M, R, S, T glass fibers (as described in chapter 5.2.3, pages 43-48 of Additives for Plastics Handbook, 2nd edition, John Murphy), or any mixtures thereof may be used.

E, R, S and T glass fibers are well known in the art. They are notably described in Fiberglass and Glass Technology, Wallenberger, Frederick T.; Bingham, Paul A. (Eds.), 2010, XIV, chapter 5, pages 197-225. R, S and T glass fibers are composed essentially of oxides of silicon, aluminium and magnesium. In particular, those glass fibers comprise typically from 62 to 75 wt% of SiO₂, from 16 to 28 wt% of Al₂O₃ and from 5 to 14 wt% of MgO. On the other hand, R, S and T glass fibers comprise less than 10 wt% of CaO.

In some embodiments, the glass fiber has high modulus. High modulus glass fibers have an elastic modulus of at least 76 GPa, preferably at least 78 GPa, more preferably at least 80 GPa, and most preferably at least 82 GPa as measured according to ASTM D2343. Examples of high modulus glass fibers include, but are not limited to, R, S and T glass fibers. A commercially available source of high modulus glass fibers is S-1 and S-2 glass fibers from Taishan and AGY, respectively.

In one embodiment, the glass fiber has a circular cross-section ('round glass fiber').

In some embodiments, in which the glass fiber is a round glass fiber, the glass fiber has an aspect ratio of less than 2, preferably less than 1.5, more preferably less than 1.2, even more preferably less than 1.1, most preferably, less than 1.05. Of course, the person of ordinary skill in the art will understand that regardless of the morphology of the glass fiber (e.g. round or flat), the aspect ratio cannot, by definition, be less than 1.

The polyamide composition may further comprise at least one reinforcing agent which is different than the glass fibers and/or carbon fibers, as described above.

A large selection of reinforcing agents, also called reinforcing fibers or fillers, may be added to the polyamide composition according to the present invention. They can be selected from fibrous and particulate reinforcing agents.

A fibrous reinforcing filler is considered herein to be a material having length, width and thickness, wherein the average length is significantly larger than both the width and thickness. Generally, such a material has an aspect ratio, defined as the average ratio between the length and the largest of the width and thickness of at least 5, at least 10, at least 20 or at least 50. In some embodiments, the reinforcing fibers (e.g. carbon fibers) have an average length of from 3 mm to 50 mm. In alternative embodiments, the reinforcing fibers have an average length of from 10 mm to 50 mm. The average length of the reinforcing fibers can be taken as the average length of the reinforcing fibers prior to incorporation into the polyamide composition or can be taken as the average length of the reinforcing fiber in the polyamide composition.

A particulate reinforcing agent may be selected from mineral fillers (such as talc, mica, kaolin, calcium carbonate, calcium silicate, magnesium carbonate), graphene, nano-graphene, carbon nanotube, and glass balls (e.g. hollow glass microspheres).

In a particular embodiment, the polyamide composition includes nano-graphene and/or carbon nanotube as a reinforcing agent.

In another particular embodiment, the polyamide composition includes at most 3 wt% of nano-graphene and/or carbon nanotube based upon the total weight of the polyamide composition in addition to glass fibers and/or carbon fibers as reinforcing agents.

In some embodiments, the polyamide composition excludes a reinforcing agent which is different from the glass fiber, as described above.

In some embodiments, the polyamide composition excludes glass spheres or balls and in particular excludes hollow glass balls.

### Additive

In the present invention, the polyamide composition comprises at least one additive, which is different from the reinforcing agent, in an amount of from 0 wt% to 30 wt%, relative to the total weight of polyamide composition.

In one embodiment, the additive is selected from the group consisting of tougheners, plasticizers, colorants, pigments, antistatic agents, dyes, lubricants (e.g. linear low density polyethylene, calcium stearate, magnesium stearate or sodium montanate), flame retardants, thermal stabilizers, light stabilizers, nucleating agents, antioxidants, impact modifiers, polymer processing aids, antiblocking additive, slip additives, antifogging additives, chemical blowing agents, nucleating agent, and any combination thereof.

In a more particular embodiment, the additive is selected from the group consisting of tougheners, plasticizers, colorants, pigments, antistatic agents, dyes, lubricants, flame retardants, and any combination thereof.

In a preferred embodiment, the additive is comprised in an amount of at least 0.1 wt%, preferably 0.2 wt%, more preferably at least 0.4 wt%, most preferably at least 0.5 wt%, and/or of at most 30 wt%, preferably at most 25 wt%, more preferably at most 15 wt%, most preferably at most 10 wt%, based upon the total weight of the polyamide composition.

In a particular embodiment, the additive is comprised in an amount of from 0.1 wt% to 5 wt%, preferably from 0.2 wt% to 3 wt%, more preferably from 0.4 wt% to 2 wt%, most preferably 0.5 wt% to 1 wt%, based upon the total weight of the polyamide composition.

### Polyamide Synthesis

The polyamide may be formed from the polycondensation of a reaction mixture including an amino acid, a diamine and/or a dicarboxylic acid.

The polyamide described herein is prepared by reacting (by heating) the monomers in presence of less than 60 wt% of water, preferentially less than 50 wt%, up to a temperature of at least Tₘ + 10°C, Tₘ being the melting temperature of the polyamide, where wt% is relative to the total weight of the reaction mixture.

In the reaction mixture, the total concentration of diamines, dicarboxylic acids and amino acids is preferably selected such that [-COOH]/[-NH₂] is from 0.9 to 1.1, preferably from 0.95 to 1.07, more preferably 1.00 to 1.05, where [-COOH] and [-NH₂] are the number of moles of -NH₂ and -COOH groups, respectively, in the reaction mixture.

As used herein, 'free of with respect to a monomer in the reaction mixture means the indicated monomer has a concentration of less than 0.5 wt%, preferably less than 0.1 wt% in the corresponding component. For example, if the reaction mixture is free of the cycloaliphatic diamine containing a cyclohexyl group, its concentration in the diamine component is less than 0.5 wt%, preferably less than 0.1 wt%.

The diamine component includes all diamines in the reaction mixture that polycondense with a dicarboxylic acid or amino acid in the reaction mixture to form recurring units of the polyamide. Similarly, the dicarboxylic acid component includes all the dicarboxylic acids in the reaction mixture that polycondense with a diamine or amino acid in the reaction mixture. Further, the amino acid component includes all of the amino acids in the reaction mixture that polycondense with a diamine, dicarboxylic acid, or amino acid in the reaction mixture.

In the present invention, oleic acid, a fatty acid that occurs naturally in various resources, may be used as a starting material to produce 9-aminopelargonic acid, i.e. 9-aminononanoic acid. Such bio-based oleic acid undergoes oxidative cleavage to produce pelargonic acid and azelaic acid, of which the latter is subject to nitrilation and then hydrogenation to obtain 9-aminopelargonic acid.

In the present invention, ricinoleic acid, a fatty acid that occurs naturally in various resources, may be used as a starting material to produce 10-aminodecanoic acid. Such bio-based ricinoleic acid can be hydrolyzed with caustic soda to produce 2-octanol or capryl alcohol and sebacic acid. Other routes like oxidative cleavage, ozonolysis, fermentation, etc. of ricinoleic acid yield sebacic acid and various by-products. Nitrilation of the sebacic acid, followed by hydrogenation deliver 10-aminodecanoic acid.

### Preparation of the Polyamide Composition

Any melt-blending method may be used for mixing polyamides and other components in the context of the present invention.

For example, polyamides and other components may be fed into a melt mixer, such as single screw extruder or twin screw extruder, agitator, single screw or twin screw kneader, or Banbury mixer, and the addition step may be addition of all ingredients at once or gradual addition in batches. When polyamides and other components are gradually added in batches, a part thereof is first added, and then is melt-mixed with the remaining that are subsequently added, until an adequately mixed composition is obtained.

If the presence of reinforcing agent presents a long physical shape (for example, a long or 'endless' fiber), drawing extrusion molding, pultrusion to form long-fiber pellets or pultrusion to form unidirectional composite tapes may be used to prepare a reinforced composition.

### Method of transporting a fuel using the polyamide composition

Another aspect of the present invention provides a method of transporting a fuel using an automotive component comprising the polyamide composition as defined in the foregoing description.

The polyamide composition can be desirably incorporated into fuel-contacting automotive components.

The fuel-contacting automotive components can be molded from the polyamide composition according to the present invention by any process adapted to thermoplastics, e.g. extrusion, injection molding, blow molding, rotomolding, overmolding or compression molding.

The term 'fuel-contacting automotive component' is intended to denote an automotive component that is designed to contact a fuel in an automobile, notably under-the-hood components.

The fuel-contacting automotive components of interest herein include, but are not limited to, a fuel line, a fuel injector, a fuel nozzle, a fuel container/tank, a combustion turbine engine, a turbine blade, a turbine nozzle, a bearing, a fuel inlet tube housing, a fuel pump body, an air intake manifold, a tubing for fuel, and a fuel-resistant quick connector.

In a preferred embodiments, the fuel-contacting automotive component comprises a fuel line, a fuel injector, a fuel nozzle, a fuel container/tank, a combustion turbine engine, a turbine blade, a turbine nozzle and a bearing.

Thanks to its excellent fuel resistance and high thermal stability, it is believed that the polyamide composition according to the present invention contributes to the reduction of swelling and dimensional changes of the fuel-contacting automotive component as well as less permeation of fuel into the fuel-contacting automotive component. For instance, the polyamide composition according to the present invention may be used to manufacture automotive components inside and/or on the surface of fuel tank, fuel lines delivering the fuel in gas or vapor to engine compartments, etc. More particularly, the fuel flows from the fuel tank toward the cylinder chamber for combustion through in-tank fuel filter, in-tank fuel pump, inline fuel filter, fuel feed line, fuel injector nozzle, fuel inlet, fuel injector, etc. Overall, the polyamide composition according to the present invention increases the efficiency of the fuel-contacting automotive component by facilitating the flow of fuel therethrough without fuel loss/uptake.

Preferred formation of the fuel-contacting automotive component includes a suitable melt-processing method such as injection molding or extrusion molding of the polyamide composition, injection molding being a preferred shaping method.

In some embodiments, the fuel, which is transported through a fuel-contacting automotive component, comprises diesel, biodiesel, gasoline, and gasoline blends with ethanol comprising E5, E10, E15 and E25. For instance, E10 corresponds a gasoline blend with 10% of anhydrous ethanol.

In a preferred embodiment, the fuel is E10.

### EXAMPLES

The invention will now be described with reference to the following examples, whose purpose is merely illustrative and not intended to limit the scope of the invention.

### Raw Materials

- PA9: see synthesis details below
- PA510: commercially available from Cathay
- PA610: commercially available from Radici (Radipol DC45)
- PA12: commercially available from Evonik (Vestamid L1700)

### Synthesis of PA9

The following process was used to prepare PA9.

A stirred batch vessel was charged with 2,425 g of 9-aminopelargonic acid (19.3 mol) and 0.736 g of sodium hypophosphite (7 mmol). The reaction mixture was heated to 230°C and kept at this temperature for 45 min. During this phase, 221 g of water was distilled. The pressure was then reduced to 600mBar and held in these conditions for 120 min. 55 g of water was recovered. The reactor was brought back to atmospheric pressure and the polyamide was downloaded and pelletized. 1,505 g of PA9 was recovered. Melt polycondensation of the 9-amino nonanoic acid in an autoclave yielded the PA9 with a molecular weight of 15,300 g/mol.

### Test methods & Results

**Fuel Uptake (ISO 175:2010):** Traction bars were prepared by injection using a DSM microcompounder. The bars were immersed for 30 days in a mixture of ethanol/toluene /isooctane (10/45/45 in vol%) at 40°C in a thermostat closed chamber. This mixture was a reference mixture for E10 fuel. The fuel uptake was monitored (in wt%) and the solvent mixture was renewed regularly to compensate for any evaporation of the volatiles. Table 1 below shows the fuel uptake (in wt%) in 4, 9, 16, 21 and 28 days, respectively.

As described in Table 1 and also shown in Figure 1, PA9 exhibited low fuel uptake, comparable to PA12, while PA510 and PA610 showed higher fuel uptake.

**Table 1**

| (in wt%) | 4 days | 9 days | 16 days | 21 days | 28 days |
|---|---|---|---|---|---|
| PA9 | 6.3 | 9.1 | 10.7 | 10.8 | 10.9 |
| PA12 | 8.3 | 10.9 | 11.2 | 11.2 | 11.0 |
| PA510 | 6.8 | 10.3 | 12.7 | 12.9 | 13.1 |
| PA610 | 6.5 | 9.0 | 11.7 | 12.9 | 12.8 |

**Melting point (ASTM D3418):** The melting point of PA9 was measured as about 207 °C similar to PA510 (212 °C), which was higher than PA12 by about 25 °C (Tₘ of PA12: about 182 °C).

These results suggest that PA9 can be used to enhance the fuel resistance and high thermal stability, while maintaining mechanical properties of the polyamide composition.

While preferred embodiments of this invention have been shown and described, modifications thereof can be made by one skilled in the art without departing from the spirit or teaching of this invention. The embodiments described herein are exemplary only and are not limiting. Many variations and modifications of compositions, articles, and methods are possible and are within the scope of the invention. Accordingly, the scope of protection is not limited by the description set out above, but is only limited by the claims which follow, that scope including all equivalents of the subject matter of the claims. Each and every claim is incorporated into the specification as an embodiment of the present invention. Thus, the claims are a further description and are an addition to the preferred embodiments of the present invention. Any incorporation by reference of documents above is limited such that no subject matter is incorporated that is contrary to the explicit disclosure herein.

The disclosure of all patent applications, and publications cited herein are hereby incorporated by reference, to the extent that they provide exemplary, procedural or other details supplementary to those set forth herein. Should the disclosure of any patents, patent applications, and publications which are incorporated herein by reference conflict with the description of the present application to the extent that it may render a term unclear, the present description shall take precedence.

## Claims

1. A fuel-contacting automotive component comprising a polyamide composition, the polyamide composition comprising:
• at least 50% by weight (wt%) of a polyamide comprising at least 50% by mol (mol%) of recurring unit R_{(PA1)} according to formula (V): 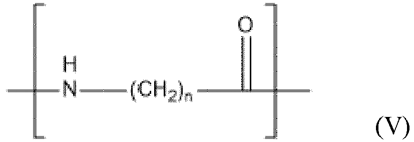
• from 0 wt% to 50 wt% of at least one reinforcing agent; and
• from 0 wt% to 30 wt% of at least one additive;
wherein
• n is 8 or 9;
• wt% is relative to the total weight of the polyamide composition; and
• mol% is relative to the total moles of recurring units in the polyamide.

2. The automotive component according to claim 1, wherein the polyamide is bio-based and/or has:
• a molecular weight, as measured according to ASTM D5296, of at least 12,000, preferably 13,000, more preferably at least 14,000, most preferably at least 14,500; and
• a glass transition temperature, as measured according to ASTM D3418, of at least 20°C, preferably at least 30°C, more preferably at least 40°C, and/or of at most 200°C, preferably at most 190°C, more preferably at most 180°C.

3. The automotive component according to claim 1 or 2, wherein the polyamide further comprises at least 0.1 mol% of recurring units R_{(PA2)} and/or R_{(PA3)} according to formulae (VI) and (VII), respectively: 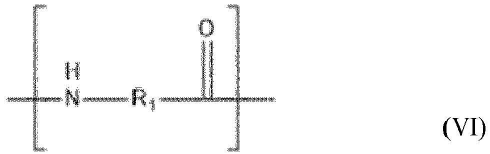 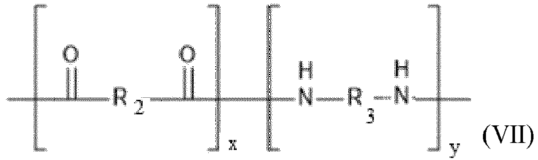 wherein
• R₁ is selected from the group consisting of a C₂-C₁₈ alkylene; a C₆-C₁₈ cycloalkylene; and a C₆-C₁₈ arylene group;
• R₂ is selected from the group consisting of a C₂-C₅₀, C₄-C₂₄, or C₆-C₁₈ alkylene; a C₆-C₃₀, C₆-C₂₄, or C₆-C₁₈ cycloalkylene; and a C₆-C₃₀, C₆-C₂₄, or C₆-C₁₈ arylene group;
• R₃ is selected from the group consisting of a C₄-C₅₀, C₆-C₂₄, or C₈-C₁₈ alkylene group; a C₄-C₃₀, C₆-C₂₄, or C₆-C₁₈ cycloalkylene group; and a C₆-C₃₀, C₆-C₂₄, or C₈-C₁₈ arylene group;
• x and y are 0 or 1, respectively; and
• the recurring unit R_{(PA2)} of formula (VI) is different from the recurring unit R_{(PA1)} of formula (V).

4. The automotive component according to any one of claims 1 to 3, wherein the polyamide is the condensation product of a reaction mixture comprising
• an amino acid/lactam component comprising at least 50 mol%, preferably at least 75 mol%, more preferably at least 80 mol%, most preferably at least 85 mol%, and/or at most 100 mol%, preferably at most 99 mol%, more preferably at most 98 mol%, most preferably at most 97 mol% of an amino acid of formula (I):
NH₂-(CH₂)ₙ-COOH (I)
wherein
o n is 8 or 9; and
o mol% is relative to the total moles of amino acid in the amino acid/lactam component; and
• a diamine component comprising from 0 mol% to 50 mol%, preferably at least 5 mol%, more preferably at least 10 mol%, most preferably at least 15 mol%, and/or preferably at most 45 mol%, more preferably at most 40 mol%, most preferably 30 mol% of a diamine of formula (III):
H₂N-R₂-NH₂ (III)
wherein
o R₂ is selected from the group consisting of a C₂-C₅₀, C₄-C₂₄, or C₆-C₁₈ alkylene; a C₆-C₃₀, C₆-C₂₄, or C₆-C₁₈ cycloalkylene; and a C₆-C₃₀, C₆-C24, or C₆-C₁₈ arylene group; and
o mol% is relative to the total moles of amine in the amine component; and
• a dicarboxylic acid component comprising from 0 mol% to 50 mol%, preferably at least 5 mol%, more preferably at least 10 mol%, most preferably at least 15 mol%, and/or preferably at most 45 mol%, more preferably at most 40 mol%, most preferably at most 30 mol% of a dicarboxylic acid of formula (III):
HOOC-R₃-COOH (IV)
wherein
∘ R₃ is selected from the group consisting of a C₄-C₅₀, C₆-C₂₄, or C₈-C₁₈ alkylene group; a C₄-C₃₀, C₆-C₂₄, or C₆-C₁₈ cycloalkylene group; and a C₆-C₃₀, C₆-C₂₄, or C₈-C₁₈ arylene group; and
∘ mol% is relative to the total moles of carboxylic acids in the carboxylic acid component.

5. The automotive component according to claim 4, wherein the amino acid/lactam component further comprises at least 5 mol%, preferably at least 10 mol%, more preferably at least 15 mol%, and/or at most 50 mol%, preferably at most 40 mol%, more preferably at most 30 mol% of an amino acid/lactam of formula (II):
NH₂-R₁-COOH (II)
wherein
• R₁ is selected from the group consisting of a C₂-C₁₈ alkylene; a C₆-C₁₈ cycloalkylene; and a C₆-C₁₈ arylene group; and
• the amino acid of formula (I) is different from the amino acid of formula (II).

6. The automotive component according to any one of claims 1 to 5, wherein
• at least one of R₁, R₂ and R₃ is substituted with one or more substituents selected from the group consisting of halogen, hydroxy, sulfo, C₁-C₆ alkoxy, C₁-C₆ alkylthio, C₁-C₆ acyl, formyl, cyano, C₆-C₁₅ aryloxy or C₆-C₁₅ aryl, alkaline earth metal sulfonate, alkyl sulfonate, quaternary ammonium, amine, and carboxyl group, and/or
• at least one of R₁, R₂ and R₃ comprises a heteroatom.

7. The automotive component according to any one of claims 1 to 6, wherein the polyamide comprises at least 80 mol%, preferably 90 mol%, more preferably 99 mol%, most preferably 100 mol% of recurring units R(_{PA1}) according to formula (I).

8. The automotive component according to any one of claims 1 to 7, wherein the polyamide has a fuel uptake of less than 10% after 10 days and less than 12% after 20 days as measured by ISO 175:2010 using a fuel composition as defined in standard formulations in SAE J1681 (Fuel C, which contains 90 vol% of a 50:50 blend of isooctane and toluene, and 10 vol% of ethanol).

9. The automotive component according to any one of claims 1 to 8, wherein the polyamide has a melting point, as measured according to ASTM D3418, of at least 180°C, preferably at least 190°C, more preferably at least 200°C, and/or of at most 290°C, preferably at most 285°C, more preferably at most 280°C.

10. The automotive component according to any one of claims 1 to 9, wherein the polyamide has a heat of fusion, as measured according to ASTM D3418, of at least 5 J/g, preferably at least 7 J/g, more preferably at least 10 J/g, and/or of at most 80 J/g, preferably at most 70 J/g, more preferably at most 60 J/g.

11. The automotive component according to any one of claims 1 to 10, wherein the polyamide composition comprises at least one reinforcing agent selected from the group consisting of mineral fillers, glass fibers, carbon fibers, synthetic polymeric fibers, aramid fibers, aluminum fibers, titanium fibers, magnesium fibers, boron carbide fibers, rock wool fibers, steel fibers, natural fibers, graphene, nano-graphene, carbon nanotube, wollastonite and any combination of two or more thereof, preferably carbon fibers and/or glass fibers, in an amount of at least 5 wt%, preferably at least 10 wt%, more preferably at least 15 wt%, and/or of at most 50 wt%, preferably at most 45 wt%, more preferably at most 40 wt%, based upon the total weight of the polyamide composition.

12. The automotive component according to any one of claims 1 to 11, wherein the polyamide composition comprises at least one additive selected from the group consisting of tougheners, plasticizers, colorants, pigments, antistatic agents, dyes, lubricants, flame retardants and any combination thereof, in an amount of at least 0.1 wt%, preferably at least 0.2 wt%, more preferably at least 0.4 wt%, most preferably at least 0.5 wt%, and/or of at most 30 wt%, preferably at most 25 wt%, more preferably at most 15 wt%, most preferably at most 10 wt%, based upon the total weight of the polymer composition.

13. The automotive component according to any one of claims 1 to 12, wherein the automotive component comprises a fuel line, a fuel injector, a fuel nozzle, a fuel container/tank, a combustion turbine engine, a turbine blade, a turbine nozzle, and a bearing.

14. A method of transporting a fuel using an automotive component according to any one of claims 1 to 13.

15. The method according to claim 14, wherein the fuel comprises diesel, biodiesel, and gasoline, preferably gasoline blends with ethanol comprising E5, E10, E15 and E25, more preferably E10.
